# EUROPÄISCHE PATENTSCHRIFT

(11) **EP 0 670 255 B1**
(45) Veröffentlichungstag und Bekanntmachung des Hinweises auf die Patenterteilung: **25.03.1998**
(21) Anmeldenummer: 95890039.1
(22) Anmeldetag: 24.02.1995
(51) Int. Cl.: B61K 9/06

(54) **Prüfgerät für die Kalibrierung von Heissläufer- und Festbremsortungsanlagen**
Inspection device for the calibration of hot-box and blocked-brake detection systems
Dispositif de contrôle pour le calibrage des systèmes de détection des boîtes chaudes et des freins bloqués

(30) Priorität: 02.03.1994 AT 449/94
(43) Veröffentlichungstag der Anmeldung: 06.09.1995
(73) Patentinhaber: VAE Aktiengesellschaft, 1010 Wien (AT)
(72) Erfinder: Othmar, Saria, Dipl.-Ing., A-8740 Zeltweg (AT); Schmall, Karl-Heinz, Ing., D-7570 Baden-Baden (DE)
(74) Vertreter: Haffner, Thomas M., Dr.

(56) Entgegenhaltungen:
- US-A- 3 998 549
- SIGNAL + DRAHT, Bd. 84,Nr. 7/8, Juli 1992 - August 1992 DARMSTADT, DE , Seiten 217-223, XP 000316374

## Beschreibung

Die Erfindung bezieht sich auf ein Prüfgerät für die einem Gehäuse und Kalibrierung von Heißläufer- und Festbremsortungsanlagen mit einem IR-Strahler, welcher relativ zum zu prüfenden Gerät positionierbar ist.

Stationäre, im Schienenverlauf installierte Heißläuferortungsanlagen bzw. Festbremsortungsanlagen sind gemäß einschlägiger Vorschriften in bestimmten Zeitabständen auf ihre ordnungsgemäße Funktion zu überprüfen. Für eine derartige Überprüfung werden gegenwärtig Infrarotgeber verwendet, welche als Heizstab oder Heizplatte ausgebildet sind und unmittelbar in der Nähe des Radsatzes angebracht sind. Die Infrarotgeber werden über eine Stromquelle bei Bedarf aktiviert. Die Funktionskontrolle unterliegt einer Reihe von Störungseinflüssen und insbesondere Verzerrungen durch Luftströmungen, wobei das Meßgerät selbst durch die direkte Anbringung am Radsatz nur schwer kalibriert werden kann. Ein weiteres stationäres Infrarotprüfgerät wird gegenwärtig auf die Heißläuferortungsanlage montiert, sodaß eine entsprechende Einstrahlung der Heizplatte gegeben ist. Mit einer derartigen Einrichtung kann entweder nur die Heißläuferortungsanlage oder die Festbremsortungsanlage überprüft werden, da für die unterschiedlichen Einstrahlwinkel das Prüfgerät jeweils neu positioniert werden muß. Die bekannten Einrichtungen weisen darüberhinaus eine relativ hohe Bauhöhe auf, sodaß ein Prüfen nur während der Zugpausen möglich ist.

Die Erfindung zielt nun darauf ab, ein Prüfgerät der eingangs genannten Art dahingehend weiterzubilden, daß mit einem einzigen Gerät mehrere Funktionen und unterschiedliche Geometrien von Heißläuferortungsanlagen bzw. Festbremsortungsanlagen sicher erfaßt werden können. Weiters zielt die Erfindung darauf ab, eine Überprüfung während des Fahrbetriebes zu ermöglichen, und darüberhinaus ein automatisches Nachjustieren dadurch zu ermöglichen, daß die Schienenelektronik bzw. die Auswerteelektronik der Heißläuferortungsanlage bzw. der Festbremsortungsanlage mitverwendet wird. Zur Lösung dieser Aufgabe ist die erfindungsgemäße Ausbildung des Prüfgerätes im wesentlichen dadurch gekennzeichnet, daß die Lagerung für wenigstens einen IR-Strahler in einem Gehäuse verschiebbar geführt und in der jeweiligen Verschiebelage festlegbar ist. Dadurch, daß der IR-Strahler nun in einem Gehäuse verschiebbar gelagert und in der jeweiligen Verschiebelage festlegbar ist, wird eine konstruktiv einfache Ausbildung geschaffen, bei welcher mit überaus geringer Bauhöhe das Auslangen gefunden werden kann und dennoch unterschiedliche Positionierungen und unterschiedliche Einstrahlwinkel mit ein und demselben Gerät sicher erfaßt werden können. In besonders vorteilhafter Weise ist das Gehäuse flach und in Richtung der Verschiebung des Strahlers längsgestreckt ausgebildet, wobei mit besonderem Vorteil das Gehäuse des Prüfgerätes lösbar, insbesondere über Haftmagnete, mit dem zu prüfenden Gerät verbunden ist. Insgesamt wird auf diese Weise ein Prüfgerät mit derart reduzierter Bauhöhe geschaffen, daß kein Teil des Prüfgerätes in irgendeiner Phase in das von der Bahnverwaltung vorgegebene, freizuhaltende Lichtraumprofil nach der Monatage an die Heißläuferortungsanlage hineinragt. Es wird somit eine Überprüfung während des Fahrbetriebes möglich.

Um eine sichere Posititionierung der IR-Strahler zu gewährleisten, ist mit Vorteil die Ausbildung so getroffen, daß der IR-Strahler in einer Kurvenbahn verschiebbar und schwenkbar geführt ist und daß ein Betätigungsknopf für die Verschiebebewegung den Gehäusedeckel des Prüfgerätes durchsetzt. Eine besonders einfache konstruktive Ausgestaltung wird dadurch erzielt, daß der Betätigungsknopf für die Verschiebung des IR-Strahlers als Stellschraube ausgebildet ist, wobei gleichzeitig die jeweilige Position des IR-Strahlers verriegelt werden kann und auch bei Erschütterungen während des Fahrbetriebes sicher beibehalten werden kann. Insgesamt wird ein derartig in Führungen, beispielsweise Führungsschlitzen, geführter Strahlkörper in den jeweiligen Prüfpositionen mit exakt vorgegebenem Einstrahlwinkel positioniert und in seiner Lage fixiert.

In konstruktiv besonder einfacher Weise ist die Ausbildung hiebei so getroffen, daß der IR-Strahler mit einer Leistungsschaltung für die Einstellung der Temperatur des Strahlers verbunden ist und daß die Leistungsschaltung mit der Auswertschaltung des zu prüfenden Gerätes verbunden ist, wodurch die Möglichkeit geschaffen wird, ein vollständig automatisches Justieren der Einrichtung zu erzielen. Über die Prüfsoftware können bei einer derartigen Ausbildung die Temperaturen vorgewählt werden, worauf der Strahlkörper jeweils aufgeheizt und die vom Scanner bzw. dem Meßwertaufnehmer der Heißläufer- und Festbremsortungsanlage erfaßten Meßwerte an die Schienenelektronik weitergeleitet werden. Eine bestimmte, auf diese Weise erfaßte Temperatur entspricht einem Spannungsausschlag der Heißläuferortungsanlage. Durch einen Soll/Ist-Vergleich kann eine Nachjustierung des Scanners erfolgen, wobei entsprechende Meldungen weitergeleitet werden können. Im Falle von relativ geringen Abweichungen im Meßbereich kann die Kalibrierung bzw. der Abgleich mittels der Software erfolgen und eine softwaremäßige Nachjustierung der Heißläuferortungsanlage erfolgen. Erst bei größeren Abweichungen wird ein Störsignal an eine zentrale Stelle weitergeleitet, sodaß der Scanner in der Folge im Detail überprüft werden muß.

Mit einem derartigen Prüfgerät ist es ebenso möglich, eine Erstjustierung der Heißläuferortungsanlage durchzuführen, da beim Durchfahren eines bestimmten Temperaturbereiches mit dem Prüfgeräte dem Scanner bestimmte Spannungswerte zugeordnet werden können. Diese Zuordnung bestimmter Spannungswerte erlaubt es, die Kalibrierung über einen weiten Temperaturbereich exakt vorzunehmen.

Eine mechanisch besonders einfache und stabile Konstruktion, insbesondere für die Überprüfung einer bestimmten vorbekannten Heißläufer- und Festbremsortungsanlage ist dadurch gekennzeichnet, daß die jeweiligen Endstellungen der Verschiebelage des IR-Strahlers durch Anschlag, insbesondere durch elastische Puffer, verbunden sind. Bei einer derartigen Ausbildung lassen sich die zwei Prüfpositionen in einfacher Weise durch Verschieben der IR-Strahler an die jeweiligen Anschlagpositionen einstellen. Für eine Anpassung eines derartigen Prüfgerätes an unterschiedliche Heißläufer- und Festbremsortungsanlagen ist mit Vorteil die Ausbildung so getroffen, daß die Kurvenbahn und die Anschläge im Prüfgerät justierbar angeordnet sind.

Um der bei Festbremsortungsanlagen von der Geometrie der Heißläuferortungsanlagen verschiedenen Geometrie gerecht zu werden und insbesondere auch horizontale Einstrahlwinkel mit dem Prüfgerät erfassen zu können, ist die Ausbildung mit Vorteil so getroffen, daß eine weitere Lagerung für einen IR-Strahler über ein Verlängerungsstück an die in der Kurvenbahn geführte Lagerung angeschlossen ist. Auch für diese Anordnung bleiben die Vorteile der Verstellbarkeit und damit der exakten Justierbarkeit erhalten.

Durch die weitreichende Verstellbarkeit der Einstellung des Strahlers ist das Prüfgerät für unterschiedliche Einsätze der Heißläuferortungsanlage bzw. Festbremsortungsanlage verwendbar. Durch die überaus flache Bauweise ist es nicht mehr erforderlich, die Zugfahrt selbst zu überwachen, und es können Einflußfaktoren erfaßt werden, welche durch einen vorbeifahrenden Zug für das gerade zu überprüfende Heißläuferortungsgerät gegeben sein können. Die Kalibrierung erfaßt somit abweichend von bekannten Einrichtungen den möglichen Einfluß des rollenden Verkehrs auf die vorgegebene Kalibrierung, wobei eine Überprüfung während des Fahrbetriebes dadurch ermöglicht wird, daß die Oberkante des Prüfgerätes bei aufgesetztem Prüfgerät unterhalb oder außerhalb des vorgegebenen Sicherheitsabstandes bei rollendem Verkehr liegt.

Die Erfindung wird nachfolgend anhand eines in der Zeichnung schematisch dargestellten Ausführungsbeispieles näher erläutert.

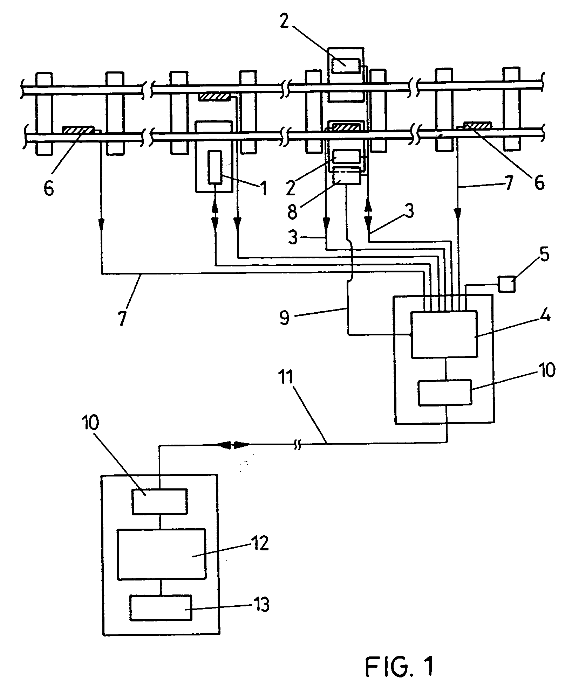

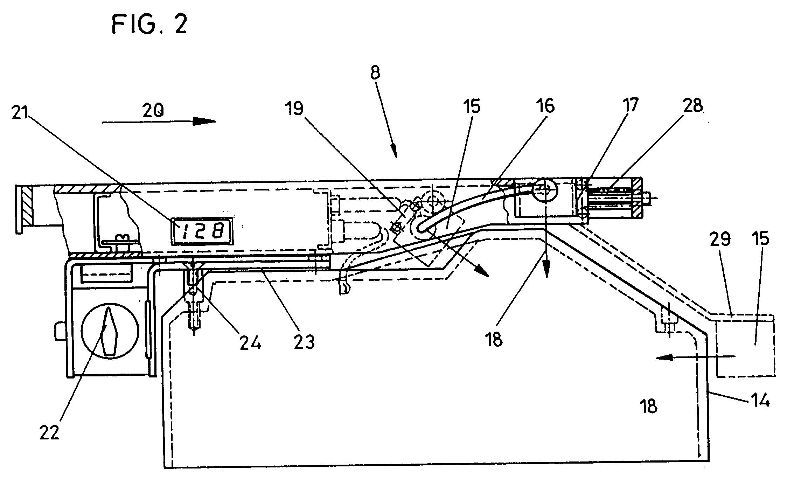

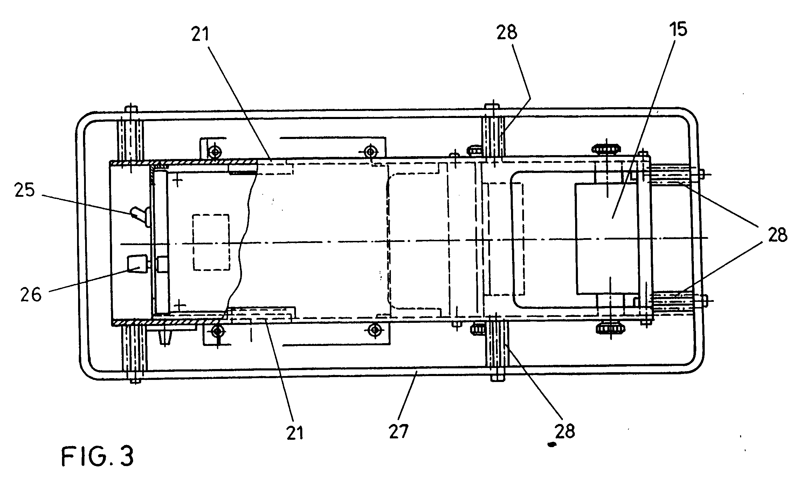

In dieser zeigen Fig.1 eine schematische Anordnung von Heißläuferortungsanlage oder Festbremsortungsanlage an einer Schiene sowie die zugehörige Steuerelektronik, wie sie auch im Zusammenhang mit dem Prüfgerät Verwendung findet; Fig.2 eine Seitenansicht des erfindungsgemäßen Prüfgerätes teilweise im Schnitt und Fig.3 eine Draufsicht auf die Darstellung nach Fig.2.

In Fig.1 ist eine Festbremsortungsanlage schematisch mit 1 angedeutet. Die Heißläuferortungsanlagen sind zu beiden Seiten des rollenden Materials angeordnet und jeweils mit 2 bezeichnet. Die Signale der Heißläuferortungsanlagen 2 sind über Signalleitungen 3 mit einer Schienenelektronik 4 verbunden. Es ist ein Außentemperaturfühler 5 vorgesehen, und es sind Schienenkontakte 6 angeordnet, deren Signale über Signalleitungen 7 an die Schienenelektronik weitergeleitet werden.

Das Prüfgerät ist schematisch mit 8 angedeutet und über Signalleitungen 9 mit der Schienenelektronik verbunden. Meldungen der Schienenelektronik werden über ein Modem 10 und eine Datenfernübertragungsleitung 11 an eine Zentrale weitergeleitet, in welcher wiederum ein Modem 10 und eine Anzeige- und Bedieneinheit 12 sowie ggf. ein Drucker 13 vorhanden sind.

In der Darstellung nach Fig.2 ist ersichtlich, in welcher Weise nun das Prüfgerät 8 relativ zu dem Gehäuse 14 einer Heißläufer- oder Festbremsortungsanlage orientiert ist. Ein IR-Strahler 15 ist längs einer Kurvenbahn 16 in zwei Endpositionen verschiebbar, wobei die Endposition für die Erfassung eines vertikalen Strahles durch einen elastischen Anschlag 17 definiert ist. In dieser Endposition am Anschlag 17 strahlt der IR-Strahler in Richtung des Pfeiles 18 unter einem Winkel von 90° auf die Scanner- bzw. Detektorzellen, und es kann somit auf diese Weise eine Heißläuferortungsanlage überprüft werden. In der zweiten Endstellung, bei welcher ein Einstrahlwinkel des IR-Strahlers 15 von etwa 50° eingenommen wird und dieser Winkel durch einen Anschlag 19 begrenzt ist, kann beispielsweise eine Heißläuferortungsanlage mit unterschiedlichem Einstrahlwinkel überwacht werden. Für die Überprüfung einer Festbremsortungsanlage wird ein IR-Strahler mit einem Verlängerungsstück 29 an die Kurvenbahn verschiebbar geführt und ein Einstrahlwinkel von 0° bis etwa 40° bestrichen. Das Gehäuse des Prüfgerätes baut hiebau überaus flach, wobei der IR-Strahler 15 in der schematisch mit dem Pfeil 20 angedeuteten Längsrichtung des Gehäuses verschieblich ist. Aufgrund dieser Verschiebbarkeit in Längsrichtung wird nur eine relativ geringe Bauhöhe benötigt, und die Leistungselektronik sowie ggf. eine Anzeigetafel 21 können an einem über das Gehäuse 14 der Heißläuferortungsanlage nach unten vorragenden Teil des Prüfgerätes angeordnet sein. Bei der Darstellung nach Fig.2 ist weiters noch ein Schalter 22 für die Betätigung von Haftmagneten ersichtlich, mittels welcher das Gehäuse des Prüfgerätes 8 an einer Stahlplatte 23 des Gehäuses 14 der Heißläuferortungsanlage festgelegt werden kann. Um eine korrekte Positionierung zu gewährleisten, können Distanzstücke 24 vorgesehen sein, in welche auch Stahlstifte für eine exakte Positionierung eintauchen können.

Bei der Darstellung nach Fig.3 sind die Gummipuffer 28 für die Verbindung des Gehäuses des Prüfgerätes zum umlaufenden Rahmen 27 ersichtlich. Bei der im Detail gezeigten Ausbildung ist ein Umschalter 25 für die Umschaltung einer Anzeige 21 an der linken oder rechten Seite des Gerätes ersichtlich. Schließlich ist ein Taster 26 für eine Rücksetzfunktion des Gerätes vorgesehen. Dieser umlaufende Rahmen 27 dient zur Erhöhung der Stabilität und zur Erleichterung des Transportes und vor allem zum Schutz des Prüfgerätes.

## Patentansprüche

1. Prüfgerät für die Kalibrierung von Heißläufer- (2) oder Festbremsortungsanlagen (1) mit einem Gehäuse und mit einem IR-Strahler (15), welcher relativ zum zu prüfenden Gerät positionierbar ist, dadurch gekennzeichnet, daß die Lagerung für wenigstens einen IR-Strahler (15) in einem Gehäuse (14) verschiebbar geführt und in der jeweiligen Verschiebelage festlegbar ist.

2. Prüfgerät nach Anspruch 1, dadurch gekennzeichnet, daß das Gehäuse (14) des Prüfgerätes (8) lösbar, insbesondere über Haftmagnete, mit dem zu prüfenden Gerät verbunden ist.

3. Prüfgerät nach Anspruch 1 oder 2, dadurch gekennzeichnet, daß das Gehäuse (14) flach und in Richtung der Verschiebung des Strahlers (15) langgestreckt ausgebildet ist.

4. Prüfgerät nach Anspruch 1, 2 oder 3, dadurch gekennzeichnet, daß der IR-Strahler (15) in einer Kurvenbahn (16) verschiebbar und schwenkbar geführt ist und daß ein Betätigungsknopf für die Verschiebebewegung den Gehäusedeckel des Prüfgerätes (8) durchsetzt.

5. Prüfgerät nach Anspruch 4, dadurch gekennzeichnet, daß der Betätigungsknopf für die Verschiebung des IR-Strahlers (15) als Stellschraube ausgebildet ist.

6. Prüfgerät nach einem der Ansprüche 1 bis 5, dadurch gekennzeichnet, daß der IR-Strahler (15) mit einer Leistungsschaltung für die Einstellung der Temperatur des Strahlers (15) verbunden ist und daß die Leistungsschaltung mit der Auswertschaltung des zu prüfenden Gerätes verbunden ist.

7. Prüfgerät nach einem der Ansprüche 1 bis 6, dadurch gekennzeichnet, daß die jeweiligen Endstellungen der Verschiebelage des IR-Strahlers (15) durch Anschlag (17, 19), insbesondere durch elastische Puffer, begrenzt sind.

8. Prüfgerät nach einem der Ansprüche 1 bis 7, dadurch gekennzeichnet, daß die Kurvenbahn (16) und die Anschläge (17, 19) im Prüfgerät (9) justierbar angeordnet sind.

9. Prüfgerät nach einem der Ansprüche 1 bis 8, dadurch gekennzeichnet, daß die Oberkante des Prüfgerätes (9) bei aufgesetztem Prüfgerät (9) unterhalb oder außerhalb des vorgegebenen Sicherheitsabstandes bei rollendem Verkehr liegt.

10. Prüfgerät nach einem der Ansprüche 1 bis 8, dadurch gekennzeichnet, daß eine weitere Lagerung für einen IR-Strahler (15) über ein Verlängerungsstück (29) an die in der Kurvenbahn (16) geführte Lagerung angeschlossen ist.

## Claims

1. A testing device for the calibration of hot-box (2) or blocked-brake (1) detection systems, comprising a housing and an IR radiator (15) capable of being positioned relative to the device to be tested, characterized in that the bearing for at least one IR radiator (15) is displaceably guided in a housing (14) and capable of being immobilized in the respective displacement position.

2. A testing device according to claim 1, characterized in that the housing (14) of the testing device (8) is detachably connected with the device to be tested, in particular by means of magnetic clamps.

3. A testing device according to claim 1 or 2, characterized in that the housing (14) is designed to be flat and elongate in the direction of displacement of the radiator (15).

4. A testing device according to claim 1, 2 or 3, characterized in that the IR radiator (15) is displaceably and pivotably guided in a curved path (16) and a displacing movement control knob passes through the housing lid of the testing device (8).

5. A testing device according to claim 4, characterized in that the control knob for the displacement of the IR radiator (15) is designed as an adjustment screw.

6. A testing device according to any one of claims 1 to 5, characterized in that the IR radiator (15) is connected with a power circuit for adjusting the temperature of the radiator (15) and the power circuit is connected with the evaluation circuit of the device to be tested.

7. A testing device according to any one of claims 1 to 6, characterized in that the respective end positions of the displacement position of the IR radiator (15) are limited by stops (17, 19), in particular elastic bumpers.

8. A testing device according to any one of claims 1 to 7, characterized in that the curved path (16) and the stops (17, 19) are adjustably arranged within the testing device (9).

9. A testing device according to any one of claims 1 to 8, characterized in that the upper edge of the testing device (9), with the testing device (9) put on, is located below or beyond the predetermined safe distance with rolling traffic.

10. A testing device according to any one of claims 1 to 8, characterized in that a further bearing for an IR radiator (15), via an extension piece (29), is connected to the bearing guided in the curved path.

## Revendications

1. Dispositif de contrôle pour le calibrage d'installations (2) de détection des boîtes chaudes ou d'installations (1) de détection des freins bloqués, comportant un boîtier et un émetteur à infrarouge (15), qui peut être positionné par rapport à l'appareil à contrôler, caractérisé en ce que le support pour au moins un émetteur à intrarouge (15) est guidé de manière à être translatable dans un boîtier (14) et peut être bloqué dans la position de translation respective.

2. Dispositif de contrôle selon la revendication 1, caractérisé en ce que le boîtier (14) du dispositif de contrôle (8) est relié de façon amovible, notamment par l'intermédiaire d'aimants adhérents, à l'appareil à contrôler.

3. Dispositif de contrôle selon la revendication 1 ou 2, caractérisé en ce que le boîtier (14) est plat et allongé dans la direction de translation de l'émetteur (15).

4. Dispositif de contrôle selon la revendication 1, 2 ou 3, caractérisé en ce que l'émetteur à infrarouge (15) est guidé de manière à être translatable et à pouvoir pivoter sur une trajectoire courbe (16) et qu'un bouton d'actionnement pour le mouvement de translation traverse le couvercle du boîtier du dispositif de contrôle (8).

5. Dispositif de contrôle selon la revendication 4, caractérisé en ce que le bouton d'actionnement pour la translation de l'émetteur à infrarouge (15) est agencé sous la forme d'une vis de réglage.

6. Dispositif de contrôle selon l'une des revendications 1 à 5, caractérisé en ce que l'émetteur à infrarouge (15) est relié à un circuit de puissance pour le réglage de la température de l'émetteur (15) et que le circuit de puissance est relié au circuit d'évaluation de l'appareil à contrôler.

7. Dispositif de contrôle selon l'une des revendications 1 à 6, caractérisé en ce que les positions d'extrémité respectives en ce qui concerne la position de translation de l'émetteur à infrarouge (15) sont limitées par des butées (17, 19), notamment par des tampons élastiques.

8. Dispositif de contrôle selon l'une des revendications 1 à 7, caractérisé en ce que la trajectoire courbe (16) et les butées (17, 19) sont disposées de manière à pouvoir être ajustées dans le dispositif de contrôle (9).

9. Dispositif de contrôle selon l'une des revendications 1 à 8, caractérisé en ce que dans le cas où le dispositif de contrôle (9) est installé, le bord supérieur du dispositif de contrôle (9) est situé, en-deçà ou au-delà de la distance de sécurité prédéterminée dans le cas du traffic roulant.

10. Dispositif de contrôle selon l'une des revendications 1 à 8, caractérisé en ce qu'un autre support pour un émetteur à infrarouge (15) est raccordé par l'intermédiaire d'un prolongement (29) au support guidé sur la trajectoire courbe (16).
